Europäisches Patentamt

(19) European Patent Office

Office européen des brevets

(11) Publication number: **0 087 368**
**B1**

(12) **EUROPEAN PATENT SPECIFICATION**

(45) Date of publication of patent specification: 26.09.90

(51) Int. Cl.⁵: **G 06 F 12/06**

(21) Application number: 83400354.3

(22) Date of filing: 21.02.83

(54) Interchangeable interface circuit structure.

(30) Priority: 24.02.82 US 351721

(43) Date of publication of application:
31.08.83 Bulletin 83/35

(45) Publication of the grant of the patent:
26.09.90 Bulletin 90/39

(84) Designated Contracting States:
AT BE CH DE FR GB IT LI LU NL SE

(56) References cited:
EP-A-0 041 406
US-A-3 983 540
US-A-4 024 505

EDN MAGAZINE, vol. 26, no. 3, February 1981,
page 88, Boston, Massachusetts, US; N.D.
MACKINTOSH: "Interrogation tells muP which
boards are present"

IBM TECHNICAL DISCLOSURE BULLETIN, vol.
22, no. 10, March 1980, pages 4615,4616, New
York, US; S. MEGURO: "Automatic module
detection"

(73) Proprietor: **DIGITAL EQUIPMENT
CORPORATION**
**111 Powdermill Road**
**Maynard Massachusetts 01754-1418 (US)**

(72) Inventor: **Caprio, Ronald A.**
**21, Francis Wyman Road**
**Burlington Massachusetts 01803 (US)**
Inventor: **Cyr, John P.**
**146 Hartwell Avenue**
**Littleton Massachusetts 01460 (US)**
Inventor: **Geaghan, Bernard**
**203 Edgebrook Drive**
**Boylston Massachusetts 01505 (US)**
Inventor: **Kotschenreuter, Paul C.**
**71 Derby Road**
**Berlin Massachusetts 01503 (US)**
Inventor: **Schanin, David J.**
**5, July Road**
**Sudbury Massachusetts 01766 (US)**
Inventor: **Salett, Ronald M.**
**42 Oakvale Road**
**Framingham Massachusetts 01701 (US)**

(74) Representative: **Mongrédien, André et al**
**c/o SOCIETE DE PROTECTION DES INVENTIONS**
**25, rue de Ponthieu**
**F-75008 Paris (FR)**

**EP  0 087 368  B1**

(56) References cited:
IEEE 1981 IECI PROCEEDINGS, San Francisco,
C.A., US, 9th-12th November 1981, pages 13-17;
"Applications of mini and microcomputers", C.J.
TAVORA et al.: "An electric nameplate
prototype"

PATENTS ABSTRACTS OF JAPAN, VOL. 5, NO.
201 (P-94)873r, 19TH DECEMBER 1981; & JP - A -
56 121 153

COMPUTER DESIGN, JANUARY 1977, PAGES
98-101, CONCORD, US; S. WASER: "P/ROM
CARD SIMPLIFIES COMPUTER DIAGNOSIS"

## Description

In data handling systems and in particular in small computer systems, the concept of enlarging the capability and/or capacity of a basic system into a medium-sized system or even a large-scale system, by adding modular units to the basic system, has long been pursued. However, heretofore a system which permitted such "modular" addition and removal required that the system provide a number of hardware (circuitry) features to accommodate the addition and removal of the modules (i.e., interface circuits and peripherals). For instance, with respect to a first feature of prior art systems, each interface circuit card has resident decoding circuitry as part thereof, so that when the master system wants to communicate with a modular device, the interface circuitry can be addressed, irrespective of its physical location amongst the slot means which hold such interface circuit (cards). Such decoder circuitry has been fabricated, in the prior art, such that for each modular device, of a given type (e.g., a floppy disc device), a standard address circuitry configuration is provided, and if the standard address were to necessitate a change, jumpers of wirewrap changes are added or made to the address decoding circuitry to "change the address".

A decoding circuitry is disclosed in the document EDN Magazine, Volume 26, No. 3, February 1981, page 88. This decoding circuit enables to interrogate each board in a system, to determine its type and, therewith, the type of the peripheral device connected to this board. A decoding circuit working as indicated above is also disclosed in the document EP—A—0041406. While some prior art systems do permit a certain amount of interchangeability (because each interface circuit is addressable), such systems have normally required that the interface circuit cards be particularly placed in an ordered arrangement of slots to implement a method for determining priority amongst a group of active interface circuits.

Another arrangement is disclosed in the document IEEE—1981—IECI Proceedings, 9—12 November 1981, pages 13—17. This arrangement is a nameplate selection commands system used to establish processor communications with one out of several nameplates. This system uses identification means arranged on the peripheral device, and connected to the data processing system by a bus separate from the bus connecting the peripheral device and the data processing system. This arrangement requires for each peripheral device, an additional bus.

The circuitry which effects a serial scanning of the "ordered" slots has, in the prior art, been some form of "daisy chain" configuration and such configurations require that there be no empty or vacant slots between active interface circuit cards. This constraint is suffered by prior art circuits. In addition, as the number of possible modular peripherals, which could be added, were in fact increased, the amount of memory space used for I/O devices addresses, per se, increased.

Further since the diagnostic routine instructions, in the prior art, use memory space in the main system, it follows that as the number of modular devices, which optionally could be added, were in fact increased, the amount of memory space used by diagnostic routine was increased. The increased use of memory space, described above, of course reduced the amount of memory space available for use with problem solving programs. In the prior art such memory restraints are overcome by adding memory capacity at additional costs.

The present invention eliminates the necessity of having address decoding circuitry on each interface circuit card; eliminates the "ordering" of interface circuit cards in particular slots, to accommodate a priority determination plan; permits vacant slots to exist between active interface circuit cards; eliminates excessive use of memory space to accommodate addresses for increased numbers of optional peripheral devices; and elminates excessive use of memory space to accommodate additional diagnostic instructions as the number of optional peripheral devices is increased; eliminates the use of an additional bus for each peripheral device. It is to the foregoing concerns that the present invention offers a solution.

The present invention is an interface circuit mounted on a circuit card; which interface circuit is provided with a means to enable it to be addressed irrespective of where it is located amongst the many possible locations into which interface circuit cards may be located on a chassis of a data handling system with which the present invention is used. Such flexible addressing procedure is made possible in part because the physical locations, per se, are addressable and therefore a circuit card need not have address decoding circuitry to effect its own addressability and such card may be in any physical location. Secondly, the interface circuit is provided with means to generate signals which identify the circuit mounted on the card at the physical location being addressed. Accordingly, after the first interrogation of a given location, to find out which circuit resides in said given location, the identification information is used in part to generate a configuration table in memory of a main system. The configuration table enables an identification address for a particular circuit to fetch the previously mentioned location address. This self-configuration enables any interface circuit card to be located into any of the holder means locations of slots in the chassis without causing the user to reprogram the operation to take into account that the interface circuit cards have been interchanged. In addition, the present interface circuit by way of further self-containment, includes a memory device wherein there is stored a predesigned diagnostic routine, particularly applicable to the interface circuit mounted on the card. This feature reduces the amount of memory space, in the main system, which is used for diagnostic routines. Further, the present interface circuit includes a priority signal arrangement which is employed with a logic circuit network in the data processing system, with which it is used, as well as a "last look" network on the card per se. The priority signal network along with an arbiter circuit in the data handling system, with which the card is employed, as well as the "last look" network on the card per se, provide a means that, irrespective of interchangeability, permits the interface card to enable a peripheral device with which it is associated to obtain control of a common data flow path in accordance with an assigned priority of the peripheral.

More precisely the invention as claimed in claim 1, is directed to an interfacing arrangement for interfacing a data handling arrangement and a peripheral data responsive arrangement, said interfacing arrangement comprising a circuit card having circuitry applied thereon, first engageable terminal means arranged for engagement with corresponding engageable terminal means formed on said data handling arrangement, and second engageable terminal means arranged for engagement with corresponding engageable terminal means formed on said peripheral data repsonsive arrangement, said circuitry comprising:

First means for storing data signals received from said first engageable terminal means and to be sent to said second engageable terminal means and data signals received from said second engageable terminal means and to be sent to said first engageable terminal means; and

Second means for receiving an instruction signal from said first engageable terminal means and sending a first control signal to said first means in response to said instruction signal having a first predetermined code, said second means comprising decoding means for decoding said instruction singal, and said first means comprising first logic circuitry for outputting a second control signal in response to receipt by said first logic circuitry of said first control signal from said decoding means and a third control signal from said first engageable terminal means, said first menas comprising a data register connected to receive said second control signal from said first logic circuitry, said second control signal enabling data transfer on a bus between said data register and said first engageable terminal means,

said second means further comprising means for generating identification signals identifying said peripheral data responsive arrangement in response to said instruction signal having a second predetermined code different than said first predetermined code, said generating means being connected to said bus, characterized in that said decoding means sends a fourth control signal to said generating means in response to said instruction signal having said second predetermined code, said generating means comprising a ROM for storing said identification signals, a counter having output terminal means connected to address terminal means of said ROM, and second logic circuitry connected to said ROM and said counter for enabling read-out of said identification signals from said ROM to said first engageable terminal means in response to receipt of said fourth control signal from said decoding means and said third control signal from said first engageable terminal means.

The features and objects of the present invention will become apparant in view of the following discussion taken in conjunction with the drawings in which:

Figure 1 is a schematic block diagram of the basic interface circuit without a priority arrangement;

Figure 2 is a block diagram depicting the circuitry required for determining priority among circuits of different priorities;

Figure 3 is a schematic diagram of the networks employed to effect a programmable priority or any of a three-level priority recognition;

Figure 4 is a block diagram of a circuitry for changing the priority arrangement.

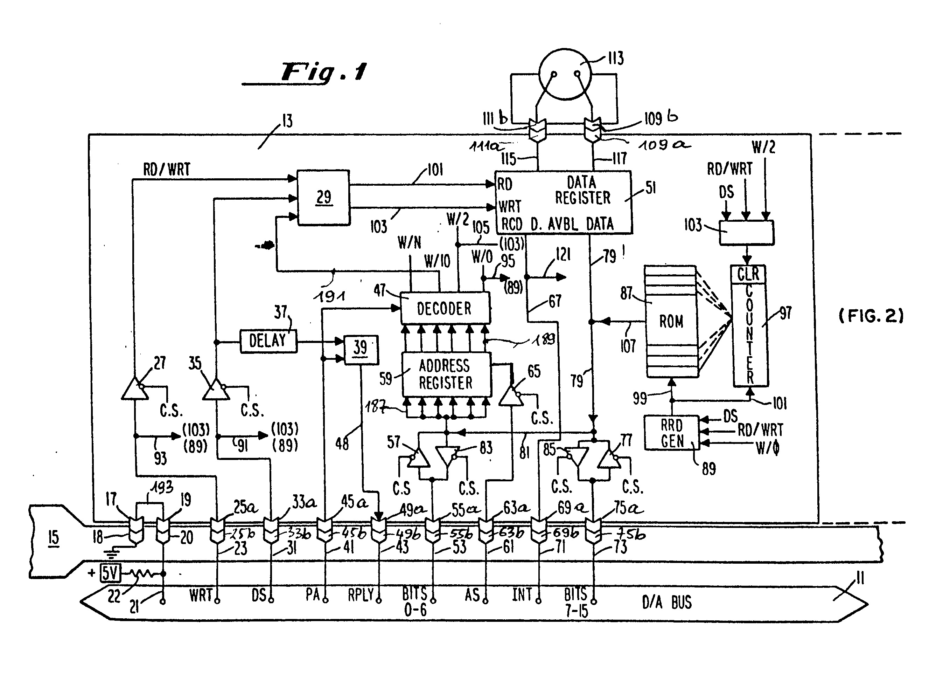

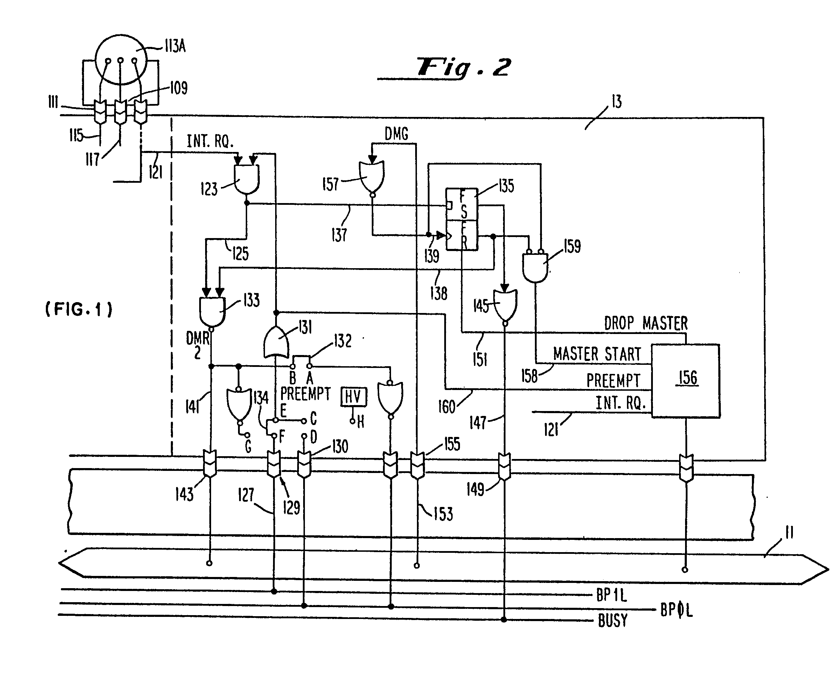

Consider Figure 1. In Figure 1, there is shown a data address bus 11 hereinafter referred to as the D/A bus, which is a general bus that is connected to a data handling system, or a computer system, with which a present interface circuit may be employed to interface a peripheral. In the preferred embodiment there are some sixty wires or data paths located in the D/A bus 11 but obviously more or less can be used depending upon the number of circuit elements that have to be driven.

The data card 13, shown in Figure 1, is mounted on a chassis of the data processing system with which it is used. In Figure 1, the data card 13 is shown mounted onto a holding means 15 which can be the base of a slot-type arrangement along which the card slides. At some given home position, the card is clamped into the slot by rotating mechanical cam device. Actually, when the card is clamped into the slot, the circuit terminals on the card, mesh or engage with the counterpart circuit terminals on the holding means. Sometimes such meshing terminals have been referred to Yaxley plugs of AMP connectors. As can be seen in Figure 1, when the circuit card 13 is clamped into position, the connector terminals 17 and 19 connected together by a conductor 193, respectively engage the connector terminals 18 and 20 so that a circuit is completed from +5V, through resistor 22 to ground potential. Accordingly, when the foregoing circuit is completed, there is a ground signal provided on line 21 which indicates that there is a "card present" in that location. The signal on line 21 is important to the data processing system, with which the circuit card is used, because the data processing system at some point would address the peripheral, with which the circuit card is associated, to either have the information transmitted therefrom or transmit information thereto. If the data processing system "believed" through some programming arrangement that a card (and therefore a peripheral), were communicatable through a given slot, but in fact, there were no interface circuit in said slot, the inquiry by the master system to that location might well result in an indication that the circuitry was not operating properly, or even worse, the failure to reply by the circuitry at the empty slot, could result in having the operation of the master system be "hung up".

Because of the way in which the logic circuitry is arranged on the circuit card, certain of the lines connected to D/A bus 11 have specific assignments. Each of the cards used with a system in which the card 13 is employed must abide by the assignment rules so that there can be interchangeability of the cards. In the embodiment shown in Figure 1, the line 23 is connected to a line in the D/A bus 11 through which there is transmitted a read/write signal. The read/write signal on line 23 is transmitted through the connector terminals (25a, 25b) through the controllable buffer 27 to the logic circuitry 29. The controllable buffer 27 is controlled by a control signal from the control signal logic circuitry in the master system which circuitry regulates the data flow into and out of the circuit card 13. The understanding of such two way data flow can be better understood from reference to the U.S. patent application filed on even date and entitled "An Arrangement To Time Separate Bidirectional Current Flow", Serial No. 351,720, and assigned to the assignee of this application. The controllable buffer 27 may be any one of a number of commercially available buffers manufactured by well-known integrated circuit manufacturers and in the preferred embodiment is an 8307 manufactured by Advanced Micro Devices Corporation. The logic circuitry 29 is a properly configured group of NAND gates and AND gates. The grouping of the NAND gates and the AND gates in the circuit 29 is for the purpose of providing a read signal on line 101 and a write signal on line 103. Actually, the way the master system operates, there is a signal on line 123 at all times indicative of a read signal unless, in fact, a write signal is generated.

In Figure 1, it can be seen that the second line 31 is connected to the D/A bus 11 to receive a data strobe signal. The master system, with which the present interface circuit card is used, provides as part of its timing signals, first an address strobe signal during a first period of time, followed thereafter by a suitable "dead period", followed thereafter by a data strobe signal and followed thereafter by a suitable "dead period". The cycle is then repeated except if the clock signal generator is put in an "idle" condition. It is the purpose of the address strobe signal and the data strobe signal to condition the proper elements within the system, including the elements on the interface circuit card, so that during the address strobe time, the information that is being transferred, is considered address information while during the data strobe time, the information that is being transferred is considered informational data. By informational data is meant not only the kind of data that is used in accounting problems, such as values of monies and the like, but also instructional data. The data strobe signal is transmitted along line 31, through the connector terminals (33a, 33b) through the controllable buffer 35 to the logic circuitry 29. In addition, the data strobe pulse is transmitted through the delay line 37 to the gate circuit 39. The significance of the data strobe pulse passing through the delay line 37, will be explained hereinafter.

The third line from the connector terminals is connected to the D/A bus 11 in order to receive a position address signal. The master system with which the interface circuitry card 13 is employed, is formed such that each slot, or each holding member location, has a particular address. That address information is stored in the memory of the system, and when it is fetched from that memory, it goes through a decoder device, which generates a single signal. The single signal so generated is indicative of the particular slot which is being addressed. The signal on line 41 is labelled PA to indicate a position address signal. The significance of the position address signal will become apparent as the description of the identification signals is considered. The position address signal is transmitted along the line 41, through the connector terminals 45a, 45b to the gate 39 and as well as to the decoder 47. The PA signal enables the decoder 47 to provide an output signal on an output 191 as will be discussed hereinafter.

The fourth line 43 which is connected from the connector terminals to the D/A bus 11 is connected thereto to provide a reply signal to the master system with which the circuit card is employed. The reply signal is generated at the gate 39 in response to the simultaneous presence of a delayed data strobe pulse and a position address signal. The reply signal is transmitted along line 48, through the connector terminals 49a, 49b, through the line 43 back to the D/A bus 11. The significance of the reply signal is explained immediately hereinafter. When the master system has addressed the circuit card 13, or is interrogating the interface circuitry on card 13 for data, there will be present a PA signal as described before and since data is being requested, a data strobe signal will be present. The delay device 37 is employed to give the system a little additional time in which to make the data that is going to be transferred available. The master system does not want to condition the master system circuitry to receive the data, if in fact, the data is not being transferred or is not available to be transferred. Therefore, the master system waits for the reply signal to be returned in order to continue with the program. By providing the slight delay through the delay device 37, any circuit element which needs additional time (for instance, the data register 51 may need additional time to have the data ready for transfer) is permitted more time than would be allowed by a normal data strobe signal.

The fifth circuit which is connected from the connector terminals to the D/A bus 11 is the circuit to receive the zero through sixth bits of a set of address signals. The low order bits of a set of address signals provide certain information on the interface circuit card which information acts to address certain locations. The seven bits provide some 128 address combinations and therefore provide a circuit board with a possibility of responding to some 128 addresses. The seven bits are transmitted over the lines 53, through the connector terminals (55a, 55b), through the buffer 57 to the input 184 of the address register 59. It should be noted at this point that while in the drawings the data flow paths are shown as single lines, in point of fact, there may be multiple lines on parallel, such as is the case with lines 53 in order to conduct a group of parallel bits or parallel signals. The seven bits enter the address register 59 and as will be seen, these bits enter the address register during the address strobe period. The seven bits are held in the address register 59 and made available to the decoder 47 at the output 189 of the address register 59 so that when the decoder 47 is enabled by a position address signal, the decoder 47 will provide one of many possible output signals.

The sixth circuit path from the connector terminals is connected to the D/A bus 11 to receive the address strobe (AS) signal therealong. As explained earlier, the address strobe signal appears or is generated during a given period of time, while the data strobe signal is generated during another period of time and there is a dead period between each of these signals. The address strobe signal is transmitted along line 61, through the connector terminals 63a, 63b to the controllable buffer 65, and therefrom to the address register to enable that register during address strobe time as previously mentioned.

The seventh circuit connected from the connector terminals is connected to the D/A bus 11 to transmit an interrupt (INT) signal therealong to the master system. An interrupt signal is generated by the peripheral device, or by the interface circuitry on behalf of the peripheral device, to indicate that the peripheral device and/or the interface circuitry is experiencing an event that should be brought to the master system's attention and with which the master system must deal. For instance, by way of illustration, the data register 51 is shown having a port labelled "received data available". That port transmits information therefrom when the information has been received from the peripheral. If the peripheral, operating on its own, delivers data to the data register 51 and the data register 51 recognizes that data is available to the master system, then an interrupt signal is sent to the master system requesting the master system to find out what the condition might be with the interface circuitry. It should be noted that sometimes, if the interface circuit is a circuit that can become a master, or can act to be in control of a data flow path by way of a priority scheme, then the signal on line 67 acts as an internal request signal. The interrupt signal is generated and transmitted along the line 67, through the connector terminals (69a, 69b), and along the line 71 to the D/A bus 11.

The eighth circuit connected from the connector terminals is connected to receive the seventh through the fifteenth bits of a set of address signals. It should be noted that the master system with which the circuit card 13 operates, operates with words of two bytes wherein each byte has eight bits. In other words, a word in the present system has *16* bits. It will be recalled that the zero bit to the sixth bit are transmitted into the card circuitry through lines 53 and the remaining bits, the 7th through 15th, are transmitted into the card circuitry through lines 73. The zero through 15th bit pass through the line 73 and line 53 through the connector terminals (75a, 75b) and connector terminals 55 through the controllable buffers 77 and 57 to the data register 51. In a reverse direction, the *16* bits are transmitted from the data register 51, along the line 79, and thereafter seven of those bits are transmitted along the line 81, through the controllable buffer 83, through the interconnecting terminals (55a, 55b), along the lines 53 back to the D/A bus 11. The remaining nine bits are transmitted from the juncture point 84, through the controllable buffer 85, through the connector terminals (75a, 75b), along the lines 73 to the D/A bus 11.

As also can be noted in Figure 1, there is shown a ROM device 87. In the preferred embodiment the ROM 87 is a 4K bit ROM and is employed to accomplish a number of operations. Insofar as this description goes, we will concern ourselves with the role that the ROM 87 plays for two major operations. Stored in the ROM 87 are the identification signals which identify the circuit card 13 and in addition thereto, stored therein are the diagnostic routine signals which are to be used in effecting a diagnostic routine, or a testing, of the critical elements of the interface circuitry of card 13.

Connected to the ROM 87 is a ROM read signal generator 89 whose output signal will be referred to hereinafter as RRD. The RRD generator 89 responds to the presence of a data strobe (DS) signal, a read/write signal, and a W/O signal. The DS signal is transmitted on line 91 after having been transmitted through the connector terminals (33a, 33b). As is shown in Figure 1, the line 91 indicates that it is connected to the RRD generator 89. The read/write signal is transmitted on line 93 after having been transmitted through the connector terminals (25a, 25b). As is shown in Figure 1, the line 93 indicates that it is connected to the RRD generator 89. Finally, the W/O signal is transmitted on line 95 from the decoder 47. As can be seen in Figure 1, the line 95 indicates that it is connected to the RRD generator 89. The word zero or W/O signal is a signal which is generated in response to the proper combination of zero bit through sixth bit of the address information as described earlier. The proper combination of those seven bits transmitted through the address register 59 to the decoder 47 generates a single signal, i.e., a W/O signal, when the system intends that the ROM 97 should be read therefrom and that the counter 97 should be incremented. The RRD signal on line 99 serves to cause the ROM 87 to read or to transmit signals therefrom, while the RRD signal on line 101 causes the counter 97 to be incremented. Each time that an RRD signal is generated, the counter 97 is incremented and causes the next serial location in the ROM 87 to be read from. It should be noted that the counter 97 can be cleared or reset to a home position in response to an output signal from the gating circuitry 103. The clear circuitry 103 is responsive to a data strobe signal, a read/write signal, and a W/2 signal. The data strobe signal and the read/write signal are respectively transmitted along lines 91 and 93 as described in connection with the RRD signal generator 89. The W/2 signal is generated by the decoder 47 and is shown in Figure 1, the W/2 signal is transmitted on line 105 which in Figure 1 shows that it is connected to the clear signal generator 103.

When the diagnostic routine is to be accomplished for the interface circuitry of the circuit card 13, the proper data storage locations of the ROM 87 are read under the control of counter 97. The test information and instructions are transmitted along the line 107, downward along the line 79, and through the controllable buffers 83 and 85 to the D/A bus 11.

It should be noted that the data register 51 is connected through the connecting terminals 109a, 109b and 111a, 111b, to the peripheral connector 113. In a preferred embodiment, the information from the associated peripheral will pass through the connector 113 and serially into the data register along the line 115, while in another operation, the information signals will be conducted serially from the data register 51 along the line 117 through the connector terminals 109a, 109b.

Because of a number of features in the present interface circuitry and its arrangement with the card, the present interface circuitry card is interchangeable into any position or slot of the chassis of the master system. As explained earlier, the closing of the connector terminals 17 and 19 with connector terminals 18 and 20 by the physical presence of the card 13, enables the master system to know that, in fact, there is an option present in that location. By having a single connector terminal, which when activated provides a signal to address a particular slot, such as the signal on line 41, the interface circuit in that slot is able to respond, irrespective of what that interface circuit may represent. By having the circuitry self-contained in the sense that it can identify itself by providing identification signals from ROM 87, the interface circuit, in response to the position address signal on 41, is able to indicate to the master system what kind of an interface circuit is located in the slot being addressed. By virtue of using the identification signals in part, the address information in the master system memory can be reconfigured to that a software program which has been predesigned to call for a peripheral associated with the circuit card 13 in accordance with certain address information, can continue to use that same address information. That address information will always operate to fetch from the master system memory the location address whereat the card 13 is located. Finally, with respect to the basic card, the fact that ROM 87 which is present on the card has a self-contained diagnostic routine, enables the system, with which the interface circuit is used, to minimize the use of memory space for use with diagnostic routines.

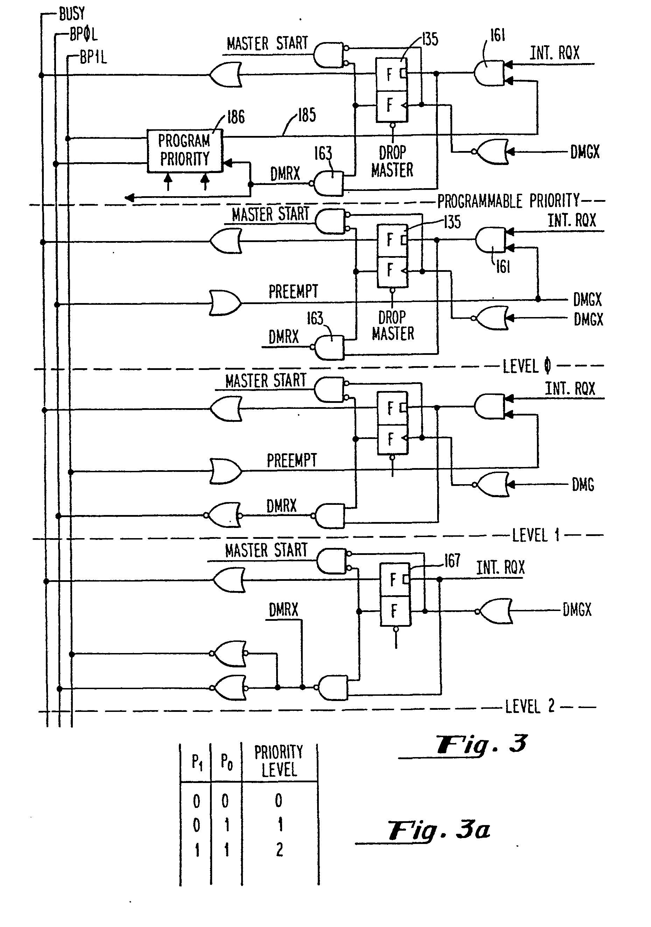

Considering Figure 2. Figure 2 depicts a circuit which would be added to the basic circuit of Figure 1 in order to effect a level one priority condition, by having the circuit of Figure 2 designed to be preempted by one priority condition, but on the other hand, having the circuit designed to preempt another priority condition. The request signal demonstrated in Figure 2 is that of "direct memory access" with the shortened notation DM. "DMR" means direct memory access request, while "DMG" means direct memory access granted. It should be borne in mind that other forms of control could be requested within the inventive concept taught here. A brief look at the table shown by Figure 3A will assist in an understanding of Figure 2. Note in Figure 3A that a circuit which is assigned a priority of $P_\phi=0$ and $P_1=0$ is considered as having a level of 0 or level zero priority. Level zero is the lowest priority in the arrangement being taught. Note further that a level "one" circuit (which is the next higher level above level zero) has priority values of $P_1=0$ and $P_0=1$ while a level "two" circuit (which is the highest priority circuit in the arrangement being taught) has priority values of $P_1=1$ and $P_0=1$. Consider Figure 2 again.

In Figure 2, there is shown a circuit having a level one priority. The circuit is connected (along with the circuit shown in Figure 1 and previously discussed) to the peripheral device through the connection 113A. When the peripheral device, or data responsive device, is in a state of data handling such that its circuitry needs to gain control of a common data flow path, the peripheral, or its interface circuit, generates an "internal request" signal on line 121. In the present example, this is a request by the peripheral, or interface circuit, to effect a direct memory access, i.e., to transfer data directly to memory in the data processing system. The internal request signal, which is a high signal, is transmitted to the AND gate 123. The other input signal to AND gate 123 comes from the BP1L line. The BP1L line is shown disposed outside of the D/A bus 11 for the purposes of discussion but in the preferred embodiment, it is located in the D/A bus 11 as are the lines "BPφL" and "BUSY".

As will become clearer at this portion of the circuit is discussed, if another interface card were subjected to an internal request, and it had a level two priority, then the BP1L line would be experiencing a low signal and AND gate 123 would not be fully conditioned to provide a high output signal on line 125. For the moment, let us consider that there are no higher priority circuits providing signals to the BP1L line and hence, the line is providing a high signal along line 127, through the connector terminals 129, through the OR gate 131 to the AND gate 123. Accordingly, if there were no higher priority circuits requesting control of the direct memory access, then AND gate 123 of circuit card 13 would provide a high signal to the NAND gate 133. The NAND gate 133 operates such that if there are two high input signals, then there will be a low output signal and if either of the input signals is low then there will be a high output signal. The other input signal to the NAND gate 133 comes from the output terminal of the reset side of the flip-flop 135, which is high when flip-flop 135 is reset. Hence a DMR signal is produced as the output from gate 133. The flip-flop 135 is a D-type flip-flop which can be transferred to its set side by a high signal on line 137 only when simultaneously there is present a clock signal, low to high transition, on line 139. In the circuitry of Figure 2, the clock signal is an inverted DMG signal from the NOR gate 157. In the situation under discussion, a high signal has been produced on line 137 which attempts to transfer the flip-flop 135 to its set side, but since the DMG has not yet been generated, flip-flop 135 is not so transferred. Since there is one high signal to the gate 159, that gate is not conditioned to produce a master start signal. Since flip-flop 135 is in its reset state, there is a high signal on line 138 to fully condition NAND gate 133 to produce a low DMR2 signal on line 141. The signal laballed DMR2 means a request for direct memory access and from the particular card in the second slot. The DMR2 signal is transmitted through the connector terminals 143, to the D/A bus 11. At the same time, the low signal from the set side of the flip-flop 135 is transmitted to the NOR gate 145 to provide a high impedance signal on line 147, through the connector terminals 149, to the BUSY line which indicates to the system that the circuit is not busy. The signal on line 151 is the reset signal to reset flip-flop 135 and this signal is generated when the mastership is given up. The interface circuit is awaiting a DMG pulse on line 153, which is transmitted through the connector terminals 155 to the NOR gate 157. The DMG signal (which is a grant signal from the master system) is a low pulse signal which provides a high pulse signal on line 139, and since there is still a high signal on line 137, flip-flop 135 is transferred to its set side. When the DMG pulse terminates there is a low signal to gate 159 and gate 159 becomes fully conditioned to provide a master start signal.

In Figure 2, there is shown a card control logic circuit 156, which is provided with a master start signal from line 158, a preempt signal from line 160, and an internal request signal from line 121. If the master start signal is generated and the internal request signal continues, the card control logic 156 provides the control signals such as DS, AS, RD/WRT and the like, which are required to effect the transfer of data to and from, between the peripheral and the system memory. When the transfer has been completed, the internal request signal will be terminated and hence, the drop master signal is generated. The drop master signal terminates the control signals from the current circuit 156 and is transmitted to line 151 to reset the flip-flop 135 which in turn, terminates the master start signal from gate 159. It should be noted that the card control logic 156 monitors the preempt signal even after the circuitry has taken control of the bus (i.e., has become the master). If a higher priority interface card exercises its priority, the preempt signal on line 160 will condition the card control logic circuit 156 to cause it to generate a drop master signal at the end of the then current bus cycle and accordingly, reset the flip-flop 135. As described above, the drop master signal causes the circuit to give up control of the bus.

Accordingly, we have seen how the circuitry of Figure 2 will produce a DMR signal if there are no higher priority circuits seeking control. Consider now a situation where a higher priority circuit is seeking control.

If a higher priority circuit (in this case a level "two" priority circuit) had already been subjected to an internal request prior to card 13 being subjected to its internal request, then the BP1L line would be low and the low signal would be transmitted through the connector terminals 129 through the OR gate 131 to render the AND gate 123 non-responsive to the internal request signal on line 121. In short, the low level signal on the BP1L line would preempt the circuit on card 13 from generating a DMR signal on line 141. The circuitry of Figure 2 provides a "last look" feature. If the circuit on card 13 had already generated a DMR signal but the DMG signal had not yet been received from the data processing system and if during this time a higher priority circuit asserts or drives the BP1L line, then the "last look" feature becomes meaningful. It is apparant that the BP1L input signal to the AND gate 123 would become low and hence, the signal on line 137 would go low. Since the flip-flop 135 needs the presence of a high signal on line 137 when the DMG signal is generated, it becomes apparent that there will be no master start signal and no seizing control of the bus. Hence, it is apparent that even if a circuit has completed its request and is about to receive a grant, the "last look" provides that if a higher priority circuit asserts its priority line, the request will be terminated and a subsequent grant will be ignored.

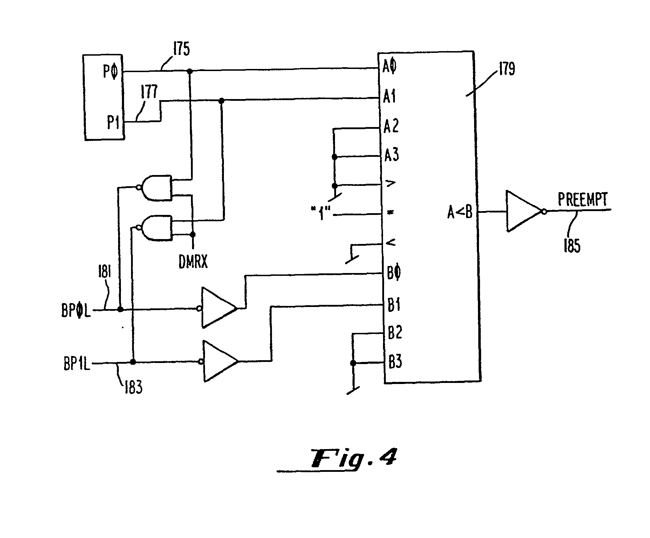

Before we examine Figure 3, examine Figure 4. In Figure 4 there are shown two lines 175 and 177. Two signals from a register, in accordance with a program, are transmitted on lines 175 and 177 to the comparator device 179. The comparator device 179 can be any number of commercially available circuits and in a preferred embodiment is a 74S85 manufactured by Texas Instruments Corporation. As can be gleaned from Figure 4, the lines 181 and 183 are connected to the BPφL and BP1L lines of Figure 3. Hence, the lines 181 and 183 carry the voltage level signals provided by all circuits participating in the priority arrangement. In the comparator 179 the programmed priority signals for the circuit card on lines 175 and 177 (designated Aϕ and A1 in the comparator 179) are compared against the signals present on the BPϕL and BP1L lines (designated as Bϕ and B1 in the comparator 179). If A is less than B, then there is provided a low preempt signal on line 185. If A is greater than or the same as B, then no low preempt signal is generated.

If we now examine Figure 3, we find that in the programmable priority circuit, if there is a low signal on line 185, the circuit is preempted by not permitting the AND gate 161 to be fully conditioned. If the AND gate 161 is not fully conditioned, then the NAND gate 193 will not provide a DMR signal. It should be noted in Figure 3 that the logic circuit 186 is meant to include the circuitry of Figure 4. We find further in Figure 3 the three level circuits. In the level zero circuit, it can be seen that a low signal on the BPϕL line will preempt the circuit by not permitting the AND gate 161 to be fully conditioned. If the AND gate 161 is not fully conditioned, then the NAND gate 163 will not provide a DMR signal. The circuitry arrangement for the flip-flop 135 is the same as that described with Figure 2. The level one circuitry is the same as that described with Figure 2. The level two circuitry differs somewhat in that there is no preempting circuit. Note that the internal request signal is transmitted directly to the flip-flop 167. Since the level two circuit is the highest priority circuit there is no higher priority to preempt it. Note also, in the level two circuit, that both the BPϕL and BP1L lines are driven low to render any lower priority circuit in a preempted state. Now, if there are two circuits of the same priority requesting control of the common data flow path, then the main system circuitry provides a means to decide therebetween.

In Figure 2 note that there are shown a set of terminals A through H connected or in close proximity to the connector terminals 129 and 130. If the circuit card is to operate with a level one priority, then the jumpers 132 and 134 are placed as shown to provide a preempt signal from the BP1L line and to provide a low signal to the BPϕL line. If the circuit card 13 were to operate with a level zero priority, then the jumper 134 would be located in the C—D terminals to provide a preempt signal from the BPϕL line and the jumper 132 would be removed since the level zero circuits do not drive any lines for preemption. If the circuit card 13 were to operate with a level two priority, then the jumper 134 would be located in terminals G—F and jumper 132 would remain in terminals A—B which would enable the circuit to drive both the BPϕL line and the BP1L line. In addition, there would need to be a jumper between terminals C—H to provide a high level signal from HV (High Voltage) to the AND gate 123.

The jumper transitions are a simple arrangement which are shown for illustrative purposes only to effect changing the priority arrangement. The circuitry of Figure 4 is an electronic solution to the problem.

The present system operates: (1) to permit selection from a large number of possible options without unduly using memory space for I/O addresses; (2) to run diagnostic routines for each interface circuit without having to use excessive memory space in the memory of the main system; (3) to address interface circuit cards, irrespective of how they are interchanged in their holding means, without providing address decoding circuitry on each interface circuit card; (4) to effect a priority determination amongst requesting interface circuits having different priorities; (5) to effect a "last look" and continual monitoring after a demand for control of a common data flow path has been made, or has been granted, so that if a high priority request is made the system will act to accommodate that request; and (6) to permit interchanging the interface cards without requiring that there be no vacant slots between active interface circuit cards.

## Claims

1. An interfacing arrangement for interfacing a data handling arrangement (15) and a peripheral data responsive arrangement (113), said interfacing arrangement comprising a circuit card (13) having circuitry applied thereon, first engageable terminal means (17, 19, 25a, 33a, 45a, 49a, 55a, 63a, 69a, 75a), arranged for engagement with corresponding engageable terminal means (18, 20, 25b, 33b, 45b, 49b, 55b, 63b, 69b, 75b) formed on said data handling arrangement (15), and second engageable terminal means (109a, 111a) arranged for engagement with corresponding engageable terminal means (109b, 111b) formed on said peripheral data responsive arrangement (113), said circuitry comprising:

first means (29, 51) for storing data signals received from said first engageable terminal means and to be sent to said second engageable terminal means and data signals received from said second engageable terminal means and to be sent to said first engageable terminal means; and

second means (47, 59) for receiving an instruction signal from said first engageable terminal means and sending a first control signal (W/10) to said first means in response to said instruction signal having a first predetermined code, said second means comprising decoding means (47) for decoding said instruction signal, and said first means comprising first logic circuitry (29) for outputting a second control signal (101, 103) in response to receipt by said first logic circuitry of said first control signal (W/10) from said decoding means and a third control signal (DS) from said first engageable terminal means, said first means comprising a data register (51) connected to receive said second control signal from said first logic circuitry (29), said second control signal enabling data transfer on a bus (79) between said data register (51) and said first engageable terminal means (75a),

said second means (47, 59) further comprising means (87, 89, 97) for generating identification signals (107) identifying said peripheral data responsive arrangement (113) in response to said instruction signal having a second predetermined code different than said first predetermined code, said generating means (87, 89, 97) being connected to said bus (79),

characterized in that said decoding means (47) sends a fourth control signal (W/O) to said generating means in response to said instruction signal having said second predetermined code, said generating means comprising a ROM (87) for storing said identification signals, a counter (97) having output terminal means connected to address terminal means of said ROM, and second logic circuitry (89) connected to said ROM (87) and said counter for enabling read-out of said identification signals from said ROM (87) to said first engageable terminal means (74a) in response to receipt of said fourth control signals (W/O) from said decoding means (47) and said third control signal (DS) from said first engageable terminal means (33a).

2. The interfacing arrangement as defined in claim 1, characterized in that said second means (47, 59) further comprises an address register (59) for storing an instruction signal, said address register having input terminal means (187) connected to said first engageable terminal means (55a) for receiving said instruction signal and output terminal means (189), said decoding means (47) having input terminal means connected to receive said instruction signal from said address register (59), a first output terminal means (191) for transmitting said first control signal (W/O) to said data register (51) in response to said instruction signal from said address register (59) having said first predetermined code, and a second output terminal means (95) for transmitting said fourth control signal (W/O) to said second logic circuitry (89) in response to said instruction signal from said address register (59) having said second predetermined code.

3. The interfacing arrangement as defined in claim 2, characterized in that diagnostic routine instructions are stored in said ROM (87).

4. The interfacing arrangement as defined in claim 2, characterized in that said arrangement further comprises a conductor (193) having first and second ends connected between two of said first engageable terminal means (17, 19), said conductor (193) being connected to no other portion of the interface circuit.

5. The interface arrangement as defined in claim 2, characterized in that said decoding means (47) is enabled by a position address signal (PA) received from a first predetermined engageable terminal (45a) of said first engageable terminal means.

6. The interfacing arrangement as defined in claim 2, characterized in that said address register (59) is enabled by an address strobe signal (AS) received from a second predetermined engageable terminal (63a) of said first engageable terminal means.

7. The interfacing arrangement as defined in claim 6, characterized in that said first logic circuitry (29) has first and second output terminals (101, 103) respectively connected to read (RD) and write (WRT) terminals of said data register (51).

8. The interfacing arrangement as defined in claim 7, characterized in that said first logic circuitry (29) is capable of outputting a read signal to said read terminal (RD) of said data register (51) in response to receipt of said first control signal (W/10) from said decoding means (47), said third control signal (DS) from a third engageable terminal (33a) of said first engageable terminal means, and a read signal from a fourth engageable terminal (25a) of said first engageable terminal means, and is capable of outputting a write signal to said write terminal (WRT) of said data register (51) in response to receipt of said first control signal (W/10) from said decoding means (47), said third control signal (DS) from said third engageable terminal (33a) and said write signal from said fourth engageable terminal (25a).

9. The interfacing arrangement as defined in claim 7, characterized in that said data register (51) transmits data to said first engageable terminal means (75a) by way of a data input/output terminal (DATA) in response to receipt of said read signal and receives data from said first engageable terminal means (75a) by way of said data input/output terminal (DATA) in response to receipt of said write signal.

10. The interfacing arrangement as defined in claim 9, characterized in that said data register (51) is capable of storing data received from said peripheral data responsive arrangement (113) by way of said second engageable terminal means (109a, 111a).

11. The interfacing arrangement as defined in claim 10, characterized in that said data register (51) has a received data available terminal (RCD, D.AVBL) capable of outputting an internal request for control signal in response to the receipt of data from said peripheral data responsive arrangement (113) by way of said second engageable terminal means (109a, 111a).

**Patentansprüche**

1. Schnittstelle zum Verknüpfen einer Datenverarbeitungsanordnung (15) und einer peripheren Daten-Ansprechanordnung (113), mit einer Schaltkreis-Karte (13), auf die eine Schaltung aufgebracht ist, ersten in Eingriff bringbaren Anschlüssen (17, 19, 25a, 33a, 45a, 49a, 55a, 63a, 69a, 75), die angeordnet sind, um in Eingriff gebracht zu werden mit zugehörigen Anschlüssen (18, 20, 25b, 33b, 45b, 49b, 55b, 63b, 69b, 75b), die auf der genannten Datenverarbeitungsanordnung (15) ausgebildet sind, und mit zweiten in Eingriff bringbaren Anschlüssen (109a, 111a), die zum Eingriff mit zugehörigen Anschlüssen (109b, 111b) auf der genannten peripheren Daten-Ansprechanordnung ausgelegt sind, wobei die Schaltung folgendes aufweist:

erste Einrichtungen (29, 51) zum Speichern von Datensignalen, die von den ersten in Eingriff bringbaren Anschlüssen empfangen werden und auf die zweiten in Eingriff bringbaren Anschlüsse zu übertragen sind, sowie Datensignale, die von den zweitin in Eingriff bringbaren Anschlüssen empfangen sind und zu den ersten in Eingriff bringbaren Anschlüssen übertragen werden sollen; und

zweite Einrichtungen (47, 59) zum Empfangen von Befehlssignalen von der ersten in Eingriff bringbaren Anschlüssen und Senden eines ersten Steuersignals (W/10) zu den ersten Einrichtungen entsprechend dem genannten Befehlssignal, das einen ersten vorgegebenen Code aufweist, wobei die genannten zweiten Einrichtungen Decodiereinrichtungen (46) aufweisen zum Decodieren des genannten Befehlssignals, und die genannten ersten Einrichtungen eine erste logische Schaltung (29) aufweisen zum Abgeben eines zweiten Steuersignals (101, 103) entsprechend einem Empfang durch die erste logische Schaltung des genannten ersten Steuersignals (W/10) von der genannten Decodiereinrichtung, und ein drittes Steuersignal (DS) von den genannten ersten in Eingriff bringbaren Anschlüssen, wobei die genannten ersten Einrichtungen ein Datenregister (51) aufweisen, das angeschlossen ist, um das genannte zweite Steuersignal von der genannten ersten logischen Schaltung (29) zu empfangen, das genannte zweite Steuersignal einen Datentransfer auf einem Bus (79) freigibt zwischen dem genannten Datenregister (51) und den genannten ersten in Eingriff bringbaren Anschlüssen (75a), wobei die genannten zweiten Einrichtungen (47, 59) weiterhin Einrichtungen (87, 89, 97) aufweisen zum Erzeugen eines Identifizierungssignals (107), das die genannten peripheren Daten-Ansprechanordnung (113) entsprechend dem genannten Befehlssignal identifiziert, wobei das Befehlssignal einen zweiten vorgegebenen Code aufweist, der verschieden ist vom ersten corgegebenen Code, die genannten Erzeugungseinrichtung (87, 89, 97) mit dem genannten Bus (79) verbunden sind, dadurch gekennzeichnet, daß

die genannte Decodiereinrichtung (47) ein viertes Steuersignal (W/O) an die genannte Erzeugungseinrichtung entsprechend dem genannten Befehlssignal mit dem genannten zweiten vorgegebenen Code übersendet, die genannte Erzeugungseinrichtung ein ROM (87) aufweist zum Speichern des genannten Identifizierungssignals, ein Zähler (97) Ausgangsanschlüsse aufweist, die mit Adress-Anschlüssen des genannten ROM verbunden sind, und zweite logische Schaltungen (89) mit dem genannten ROM (87) und dem genannten Zähler verbunden sind, um ein Auslesen des genannten Identifizierungssignals aus dem ROM (87) in die genannten ersten in Eingriff bringbaren Anschlüsse (75a) zu ermöglichen entsprechend dem Empfang des genannten vierten Steuersignals (W/O) von der Decodiereinrichtung (47) und dem genannten dritten Steuersignal (DS) von den genannten ersten in Eingriff bringbaren Anschlüssen (33a).

2. Schnittstellenanordnung gemäß Anspruch 1, dadurch gekennzeichnet, daß die genannten zweiten Einrichtung (47, 59) weiterhin ein Adress-Register (59) aufweisen zum Speichern eines Befehlssignals, das genannte Adress-Register einen Eingangsanschluß (187) aufweist, der mit den genannten ersten in Eingriff bringbaren Anschlüssen (55a) verbunden ist zum Empfang des genannten Befahlssignals, und Ausgangs-Anschlüsse (189), wobei die genannte Decodiereinrichtung (47) einen Eingangsanschluß aufweist, der angeschlossen ist, um von dem genannten Adress-Register (59) das genannte Befehlssignal zu empfangen, und ein erster Ausgangsanchluß (191) zum übertragen des genannten ersten Steuersignals (W/10) an das genannte Datenregister (51) entsprechend dem genannten Befehlssignal aus dem Adress-Register (59) vorgesehen ist, wobei das Signal den ersten vorgegebenen Code aufweist, und wobei ein zweiter Ausgangsanschluß (95) zum Übertragen des genanntem vierten Steuersignals (W/O) zur genannten zweiten logischen Schaltung (89) vorgesehen ist in Ansprache auf das genannte befehlssignal aus dem genannten Adress-Register (59) mit dem genannten zweiten vorgegeben Code.

3. Schnittstellenanordnung gemäß Anspruch 2, dadurch gekennzeichnet, daß diagnostische Program-Befehle im genannten ROM (87) abgespeichert sind.

4. Schnittstellenanordnung gemäß Anspruch 2, dadurch gekennzeichnet, daß die genannte Anordnung weiterhin einen Leiter (193) aufweist mit ersten un zweiten Enden, die zwischen zwei der genannten ersten in Eingriff bringbaren Anschlüsse (17, 19) geschaltet sind, wobei der ganannte Leiter (193) mit keinem anderen Teil des Schnittstellenkreises verbunden ist.

5. Schnittstellenanordnung gemäß Anspruch 2, dadurch gekennzeichnet, daß die genannte Decodiereinrichtung (47) freigegeben wird durch ein Positions-Adressignal (PA), das von einem ersten vorgegebenen in Eingriff bringbaren Anschluß (45a) der ersten in Eingriff bringbaren Anschlußeinrichtungen empfangen wird.

6. Schnittstellenanordnung gemäß Anspruch 2, dadurch gekennzeichnet, daß das genannte Adress-Register (59) freigegeben wird durch ein Adress-Freigabesignal (AS), das von einem zweiten vorgegebenen in Eingriff bringbaren Anschluß (63a) der ersten in Eingriff bringbaren Anschlüsse empfangen wird.

7. Schnittstellenanordnung nach Anspruch 6, dadurch gekennzeichnet, daß der genannte erste logische Schaltkreis (29) erste un zweite Ausgangsanschlüsse (101, 103) aufweist, die jeweils mit Lese-(RD)- und Schreib-(WRT)-Anschlüssen des genannten Datenregisters (51) verbunden sind.

8. Schnittstellenanordnung gemäß Anspruch 7, dadurch gekennzeichnet, daß der genannte erste logische Schaltkreis (29) in der Lage ist, ein Lesesignal an den genannten Lese-Anschluß (RD) des genannten Datenregisters (51) abzugeben entsprechend dem Empfang des ersten genannten Steuersignals (W/10) von der genannten Decodiereinrichtung (47), das genannte dritte Steuersignal (DS) von einem dritten in Eingriff bringbaren Anschluß (33a) der genannten ersten in Eingriff bringbaren Anschlüsse, und ein Lesesignal von einem vierten in Eingriff bringbaren Anschluß (25a) der genannten ersten in Eingriff bringbaren Anschlüsse empfangen wird, und daß der genannte erste logische Schaltkreis in der Lage ist, ein Schreibsignal an den genannten Schreibanschluß (WRT) des genannten Datenregisters (51) abzugeben in Ansprache auf den Empfang des genannten ersten Steuersignals (W/10) von der genannten Decodiereinrichtung (47), dem genannten dritten Steuersignal (DS) von dem genannten dritten in Eingriff bringbaren Anschluß (33a) und dem genannten Schreibsignal von dem genannten vierten in Eingriff bringbaren Anschluß (25a).

9. Schnittstellenanordnung nach Anspruch 7, dadurch gekennzeichnet, daß das genannte Datenregister (51) Daten an den genannten ersten in Eingriff bringbaren Anschluß (75a) überträgt mittels eines Daten-Eingabe/Ausgabe-Anschlusses (DATA) entsprechend dem Empfang des genannten Lesesignals, und Daten von genannten ersten in Eingriff bringbaren Anschluß (75) empfängt über einen Daten-Eingabe/Ausgabe/Anschluß (DATA) entsprechend dem Empfang des genannten Schreibsignals.

10. Schnittstellenanordnung gamäß Anspruch 9, dadurch gekannzeichnet, daß das genannte Datenregister (51) in der Lage ist Daten zu speichern, die von der ganannten peripheren Daten-Ansprechanordnung (113) empfangen werden über den genanngen zweiten in Eingriff bringbaren Anschluß (109a, 111a).

11. Schnittstellenanordnung gemäß Anspruch 10, dadurch gekennzeichnet, daß das zweite Datenregister (51) einen Anschluß (RCD, D.AVBL) bezüglich empfangener Daten aufweist, der in der Lage ist, eine interne Anfrage für eine Steuersignal abzugeben entsprechend dem Empfang von Daten von der genannten peripheren Daten-Ansprechanordnung (113) über die genannten zweiten in Eingriff bringbaren Anschlüsse (109a, 111a).

**Revendications**

1. Dispositif d'interfaçage pour interfacer un dispositif de traitement de données (15) et un dispositif périphérique (113) sensible à des données, ledit dispositif d'interfaçage comprenant un carte (13) à circuit imprimé ayant des éléments de circuit appliqués dessus, des premiers moyens d'enclenchement de bornes (17, 19, 25a, 33a, 45a, 49a, 55a, 63a, 69a, 75a) disposés pour un enclenchement avec des moyens d'enclenchement de bornes correspondants (18, 20, 25b, 33b, 45b, 49b, 55b, 63b, 69b, 75b) formés sur ledit dispositif de traitement de données, et des deuxièmes moyens d'enclenchement de bornes (109a, 111a) disposés pour un enclenchement avec des moyens d'enclenchement de bornes correspondants (109b, 111b) formés sur ledit dispositif périphérique (113) sensible à des données, lesdits éléments de circuit comprenant:

Premiers moyens (29, 51) pour stocker des signaux de données reçus en provenance desdits premiers moyens d'enclenchement de bornes et à envoyer auxdits deuxièmes moyens d'enclenchement de bornes et des signaux de données reçus en provenance desdits deuxièmes moyens d'enclenchement de bornes et à envoyer auxdits premiers moyens d'enclenchement de bornes; et

Deuxièmes moyens (47, 59) pour recevoir un signal d'instruction en provenance desdits premiers moyens d'enclenchement de bornes et envoyant un premier signal de commande (W/10) auxdits premiers moyens en réponse audit signal d'instruction ayant un premier code prédéterminé, lesdits deuxièmes moyens comprenant des moyens de décodage (47) pour décoder ledit signal d'instruction, et lesdits premiers moyens comprenant des premiers éléments de circuit logique (29) pour sortir un deuxiène signal de commande (101, 103) en réponse à la réception par les premiers éléments de circuit logique dudit premier signal de commande (W/10) en provenance desdits moyens de décodage et d'un troisième signal de commande (DS) en provenance desdits premiers moyens d'enclenchement de bornes,

lesdits premiers moyens comprenent un registre de données (51) connecté pour recevoir ledit deuxième signal de commande en provenance desdits premiers éléments de circuit logique (29), ledit deuxième signal de commande permettant le transfert de données sur un bus (79) entre ledit registre de données (51) et lesdits premiers moyens d'enclenchement de bornes (75a),

lesdits deuxièmes moyens (47, 59) comprenant de plus des moyens (87, 89, 97) pour générer des signaux d'identification (107) identifiant ledit dispositif périphérique (113) sensible à des données en réponse audit signal d'instruction ayant un deuxième code prédéterminé différent dudit premier code prédéterminé, lesdits moyens générateurs (87, 89, 97) étant connectés audit bus (79),

caractérisés en ce que lesdits moyens de décodage (47) envoient un quatrième signal de commande (W/O) auxdits moyens générateurs en réponse audit signal d'instruction ayant ledit deuxième code prédéterminé, lesdits moyens générateurs comprenant une mémoire morte (87) pour stocker lesdits signaux d'identification, un compteur (97) ayant des moyens à bornes de sortie connectés à des moyens à bornes d'adresses de ladite mémoire morte, et des deuxièmes éléments de circuit logique (89) connectés à ladite mémoire morte (87) et audit compteur pour permettre la sortie de mémoire desdits signaux d'identification en provenance de ladite mémoire morte (87) vers lesdits premiers moyens d'enclenchement de bornes (75a), en réponse à la réception dudit quatrième signal de commande (W/O) en provenance desdits moyens de décodage (47) et dudit troisième signal de commande (DS) en provenance desdits premiers moyens d'enclenchement de bornes (33a).

2. Dispositif d'interfaçage selon la revendication 1, caractérisé en ce que lesdits deuxièmes moyens (47, 59) comprennent de plus un registre d'adresses (59) pour stocker un signal d'instruction, ledit registre d'adresses ayant des moyens à bornes d'entrée (187) connectés auxdits premiers moyens d'enclenchement de bornes (55a) pour recevoir ledit signal d'instruction et des moyens à bornes de sortie (189), lesdits moyens de décodage (47) ayant des moyens à bornes d'entrée pour recevoir ledit signal d'instruction en provenance dudit registre d'adresses (59), un premier moyen à borne de sortie (191) pour transmettre ledit premier signal de commande (W/10) audit registre de données (51) en réponse audit signal d'instruction en provenance dudit registre d'adresses (59) ayant ledit premier code prédéterminé, et un deuxième moyen à borne de sortie (95) pour transmettre ledit quatrième signal de commande (W/O) auxdits deuxièmes éléments de circuit logique (89) en réponse audit signal d'instruction en provenance dudit registre d'adresses (59) ayant ledit deuxième code prédéterminé.

3. Dispositif d'interfaçage selon la revendication 2, caractérisé en ce que des instructions de routine de diagnostic sont stockées dans ladite mémoire morte (87).

4. Dispositif d'interfaçage selon la revendication 2, caractérisé en ce que ledit dispositif comprend de plus un conducteur (193) ayant des première et deuxième extrémités connectées entre deux desdits premiers moyens d'enclenchement de bornes (17, 19), ledit connecteur (193) n'étant connecté à aucune autre portion du circuit d'interface.

5. Dispositif d'interfaçage selon la revendication 2, caractérisé en ce que lesdits moyens de décodage (47) sont validés par un signal d'adresse de position (PA) reçu en provenance d'une première borne d'enclenchement prédéterminée (45a) desdits premiers moyens d'enclenchement de bornes.

6. Dispositif d'interfaçage selon la revendication 2, caractérisé en ce que ledit registre d'adresses (59) est validé par un signal sélecteur d'adresse (AS) reçu en provenance d'une deuxième borne d'enclenchement prédéterminée (63a) desdits premiers moyens d'enclenchement de bornes.

7. Dispositif d'interfaçage selon la revendication 6, caractérisé en ce que lesdits premiers éléments de circuit logique (29) ont des première et deuxième bornes de sortie (101, 103) connectées respectivement aux bornes de lecture (RD) et d'écriture (WRT) dudit registre de données (51).

8. Dispositif d'interfaçage selon la revendication 7, caractérisé en ce que lesdits premiers éléments de circuit logique (29) sont capables de sortir un signal de lecture vers ladite borne de lecture (RD) dudit registre de données (51) en réponse à la réception dudit premier signal de commande (W/10) en provenance desdits moyens de décodage (47), dudit troisième signal de commande (DS) en provenance d'une troisième borne d'enclenchement (33a) desdits moyens d'enclenchement de bornes, et d'un signal de lecture en provenance d'une quatrième borne d'enclenchement (25a) desdits premiers moyens d'enclenchement de bornes, et sont capables de sortir un signal d'écriture vers ladite borne d'écriture (WRT) dudit registre de données (51) en réponse à la récaption dudit premier signal de commande (W/10) en provenance desdits moyens de décodage (47), dudit troisième signal de commande (DS) en provenance de ladite troisième borne d'enclenchement (33a), et dudit signal d'écriture en provenance de ladite quatrième borne d'enclenchement (25a),

9. Dispositif d'interfaçage selon la revendication 7, caractérisé en ce que ledit registre de données (51) transmet des données vers lesdits premiers moyens d'enclenchement de bornes (75a) par une borne d'entrée/sortie de données (DATA) en réponse à la réception dudit signal de lecture et reçoit des données en provenance des premiers moyens d'enclenchement de bornes (75a) par ladite borne d'entrée/sortie (DATA) en réponse à la récaption dudit signal d'écriture.

10. Dispositif d'interfaçage selon la revendication 9, caractérisé en ce que ledit registre de données (51) est capable de stocker des données reçues en provenance dudit dispositif périphérique (113) sensible à des données par lesdits deuxièmes moyens d'enclenchement de bornes (109a, 111a).

11. Dispositif d'interfaçage selon la revendication 10, caractérisé en ce que ledit registre de données (51) a une borne de disponibilté de données reçues (RCD D.AVBL) capable de sortir une demande interne pour un signal de commande en réponse à la réception de données en provenance dudit dispositif périphérique (113) sensible à des données par lesdits deuxièmes moyens d'enclenchement de bornes (109a, 111a).

_Fig.1_

Fig. 2

(FIG.1)

_Fig. 3_

_Fig. 3a_

| P₁ | P₀ | PRIORITY LEVEL |
|----|----|----------------|
| 0 | 0 | 0 |
| 0 | 1 | 1 |
| 1 | 1 | 2 |

**_Fig.4_**

4